# EUROPEAN PATENT APPLICATION

(11) **EP 2 402 930 A1**
(43) Date of publication of application: **04.01.2012**
(21) Application number: 10425222.6
(22) Date of filing: 30.06.2010
(51) Int. Cl.: G09G 3/20

(54) **Apparatus and process for releasing information in shops**

(71) Applicant: S5 Tech S.r.L, 20144 Milano (IT)
(72) Inventor: Del Sorbo, Gabriele, 21057 Olgiate Olona (Varese) (IT)
(74) Representative: Lunati & Mazzoni S.r.L.

(57) **Abstract**

The invention discloses an apparatus and a process for releasing information (1) in shops (50) comprising at least one shelf (51) including different types of products (52), the information-releasing apparatus comprising: a plurality of electronic labels (2) including an indication screen (2b) and each adapted to quote the price of at least one type of product (52), a plurality of hubs (3), a server (4) connected to at least one hub (3) and adapted to enable command and control of the electronic labels (2) by a responsible person, in which each electronic label (2) is adapted to communicate with a hub (3) through first and second end connection means (2a, 3a) disposed on the electronic labels (2) and the hubs (3) respectively, and in which the hubs (3) are mutually connected through main connection means (3b) in a mesh network (30).

## Description

The present invention relates to an apparatus and a process for releasing information in shops and the like of the type pointed out in the preamble of the first claim.

Presently, in shops and in particular in supermarkets, there is the problem of giving information as to the goods sold. In particular it is necessary to show the price of the individual products to the supermarket customers together with other information required by law and varying in relation to the country of use such as price per amount, weight, size, sell-by date or others (information concerning prices), while the internal staff must know further information such as the bar code of the products, the amount of goods in stock, the rearrangement time, the goods position in the warehouse or others (service information).

This problem is generally solved by means of paper labels placed on or close to the products and on which all necessary information is printed.

It is apparent that this solution is very arduous and expensive since not only frequent printing of the labels is required at each change of price or information, but it is also necessary to carry out change of said labels by the internal staff of the supermarket.

This problem has been partly eliminated by means of the electronic labels consisting of small LCD screens provided with internal logic and connected through electromagnetic waves to a receiver/transmitter. This receiver/transmitter is connected by a LAN cable to the shop's server. On varying of a price on the server, the server transmits this change, through a cable, to the receiver/transmitter that in turn through radio waves, transmits it to the LCD label that will publish it. The price can be also changed directly on the electronic label through a suitable electronic device.

The radio waves by which each electronic label is in communication with the receiver/transmitter can work on electromagnetic waves of different frequency depending on the laws in force in the country.

In addition, the electronic labels when queried by one of the supermarket's internal workers provided with a suitable electronic device, can display the service information that is transmitted by the receiver/transmitter to the electronic labels making the operator able to read them directly.

The described known art has some important drawbacks.

In particular, some electronic labels may lose the communication field with the receiver/transmitter and consequently the labels do not reply to the commands any longer. This drawback can be due to the occurrence of unexpected obstacles obscuring the communications, for example.

Another drawback resides in that for installation of the receivers/transmitters important works are required for adaptation of the supermarket and useful for operation of the system. In fact, in the known art it is provided that the receivers/transmitters should have a connection with the electric network and a direct data connection with the server and/or a direct connection with antennas for signal reception.

Another drawback is that the different communications between electronic label and receiver/transmitter are in great number and expensive in terms of energy consumption. Each electronic battery-operated electronic label therefore has a lifetime becoming exhausted after few years and the duration of which is directly proportional to the number of communications with the receiver/transmitter.

In addition, display of the service information takes place on the label's display that is limited in sizes and therefore does not allow transmission and easy reading of complex information by the supermarket's operator.

A further drawback resides in that the frequencies presently used have different problems: if the 2.4 GHz frequency is adopted, while it is optimal in terms of diffusion in the environment, it is invasive and overcrowded because it is used by home routers and various devices. Therefore problems and interferences can arise with apparatus and devices close to the shop and even a malfunction of the system itself. For other frequencies such as the low frequencies, laying of an antenna cable is required which can be some hundreds of meters long.

Other infrared communications or close to 1 GHz involve connection problems and the like.

Another drawback is represented by the fact that, in the absence of electric energy the receiver/transmitter system stops working and makes the whole system inoperative.

A further drawback resides in that the plurality of receivers/transmitters make maintenance of same complicated and the presence of qualified staff is required. In case of failure of a receiver/transmitter the labels cannot receive any data and therefore a quick and resolutive intervention is required to enable the supermarket to recover its full effectiveness.

Under this situation, the technical task underlying the present invention is to provide an apparatus and a process for releasing information in shops and the like that is able to obviate the mentioned drawbacks.

Within the scope of this technical task it is an important aim of the invention to obtain an apparatus and a process for releasing information in shops and the like adapted to enable an optimal communication with the receivers/transmitters or the internal server even under awkward conditions and that does not give rise to interferences or the like.

Another aim is to obtain an apparatus capable of minimising the adaptation works of the supermarket reducing the structural interventions to the smallest amount. Another aim is to provide a system enabling quick interventions for servicing.

Still another aim is to enable the supermarket to work even in the absence of electric energy.

Another important aim of the invention is to provide an apparatus and a process for releasing information in shops and the like that can give proper information to the responsible persons or shop assistants.

Another important aim is to select communication frequencies capable of minimising the interference problems between the different frequencies possibly already used at the inside or the outside of the supermarket.

A further aim is to conceive an apparatus and a process for releasing information in shops and the like that does not dissipate the batteries quickly.

A still further aim is to conceive an apparatus and a process for releasing information in shops that is cheap and practical.

The technical task mentioned and the aims specified are achieved by an apparatus and a process for releasing information in shops and the like as claimed in the appended independent claims. Preferred embodiments are highlighted in the dependent claims.

The features and advantages of the invention are hereinafter clarified by the detailed description of a preferred embodiment of the invention, with reference to the accompanying drawings, in which:

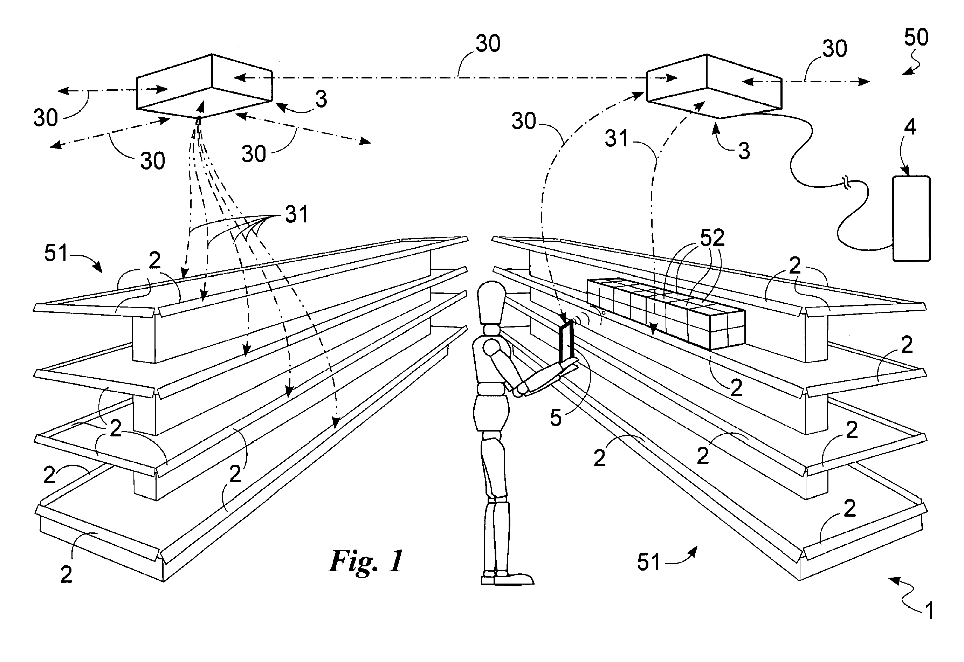

**Fig. 1** shows a scheme of a shop including an apparatus according to the invention;
**Fig. 2** shows part of the apparatus of the invention; and
**Fig. 3** is a connection diagram of part of the apparatus of the invention.

With reference to the mentioned figures, the apparatus according to the invention is generally identified by reference numeral **1**.

This apparatus 1 is adapted to release information in shops **50** and the like, therefore in particular in supermarkets, hypermarkets and big shops, but also in small shops. These shops 50 comprise at least one shelf **51** or the like and preferably a plurality of shelves 51, suitably including a plurality of flat boards. These shelves 51 house a plurality of types of goods or products **52**. The information released is intended for both the shop's purchasers and the shop's internal staff. The information therefore in particular consists, in the first case, of the prices of the types of goods 52, or also judgements on the products, that is offers and others, and in the second case, of the amounts of products still in stock, the orders in progress and other service information.

Apparatus 1 briefly comprises a plurality of electronic labels **2**, each adapted to quote the price of at least one type of product 52, a plurality of hubs **3** mutually connected, a server **4**, connected to at least one hub 3, and a control device **5**, adapted to be handled by a user.

In particular the individual labels 2 comprise an indication screen **2b** adapted to display the price of at least one type of product 52 or a plurality of types of products 52 and possibly also advertisements. In the first case in particular electronic labels 2 are concerned which have an LCD screen that is some centimetres large, in the second case on the contrary screens with electronic ink or OLED technology or the like are concerned, the length of these screens suitably being in the order of the length of shelf 51. The electronic labels 2 then preferably comprise: first end connection means **2a**, an identifying element 2c, a battery preferably of the rechargeable type, an accelerometer or an inclinometer and an electronic card known by itself, connected to said elements and adapted to control them. In greater detail, the end connection means 2a is preferably made up of an antenna and a transceiver circuit for aerial electromagnetic waves, i.e. not through a cable, to a frequency of about 2.4 GHz, more particularly adapted to communicate with the protocol known with the trade name ZigBee and communicating with the protocol IEEE 802.15.4. The identifying element 2c is preferably passive and therefore does not involve any energy waste. It suitably consists of a so-called passive RFID tag, comprising an antenna adapted to also charge a communicating circuit with energy on reception, or alternatively of a bar code or the like or a mere alphanumeric identification code. Labels 2 can finally be connected to the electric network or an external battery, in which case the battery inside the label can act as a backup battery.

Hubs 3 suitably comprise second end connection means 3a, main connection means 3b, connection means to the server 4, such as a network card or the like or a control card, to the electric network, and a rechargeable battery for electric backup, adapted to make up for possible blackouts of the electric network. In greater detail, the second end connection means 3a is similar to the described first end connection means 2a and is adapted to communicate with the same. The main connection means 3b on the contrary is of the type adapted to transmit and receive through aerial electromagnetic waves, i.e. not through a cable, to a frequency close to 5 GHz, and in particular close to the band provided by the local regulations and according to the protocol referred to as IEEE 802.11 or also Wi-Fi Wireless LAN.

In addition, hubs 3 can be divided into two portions: a docking station 3c and a logic portion 3d mutually connected through a quick-release connection **3e**. In particular the docking station comprises the connection to the electric network, rechargeable batteries for electric backup adapted to make up for possible blackouts of the electric network, a possible LAN and USB connection and a proprietary male connector, part of the quick-release connection 3e which is able to bring electric energy to the logic portion 3d, and also data relating to the LAN or USB.

Alternatively, the end connection means 2a and 3a and the main connection means 3b may act on the same frequencies and possibly through the same protocols. In these cases the second end connection means 3a and the main connection means 3b are joined in a single device comprising a transceiver antenna and possible backup circuits, In the last-mentioned case the frequency used is preferably close to 5 GHz.

Preferably, the server 4 preferably consists of a server for management of the shop 50 substantially consisting of a computer. It is adapted to enable command and control of apparatus 1, in particular of the electronic labels 2 by a responsible person inside the shop or the like. Possibly the server can be installed on a hub 3 and in particular on a docking station 3c drawing electricity therefrom and using the LAN connection thereof.

The control devices 5 suitably consist of PDA, palm-sized computers, tablet computers or others. They are adapted to be used by the responsible persons or operators inside the shop 50 and to supply information about the amount of products 52 in stock or other service information. They comprise a service screen 5a, service connection means 5b, identification means 5c, possibly a keypad or a touchscreen, and an electronic card adapted to manage device 5 and a rechargeable battery. In particular, the service screen can be LCD, OLED, electronic-ink screen or the like and have varying sizes. The service connection means 5b preferably is of the same type as the main connection means 3b and is adapted to communicate therewith. Finally, the identification means 5c is adapted to read the identifying element 2c and therefore consists of RFID tag readers with a power that can be varied and selected, or bar code readers, or a simple keypad to be used by a responsible person in the shop.

From a structural point of view, the shop 50 preferably comprises a plurality of electronic labels 2 placed at or close to the products 52 in the same manner as the paper labels or the electronic labels of known type.

Hubs 3 on the contrary are suitably placed at the ceiling of the shop 50, and connected to the electric network, possibly through the docking stations 3a, using the same system by which the ceiling lamps of the shop 50 are connected, for example. In addition, each hub 3 is associated with several shelves 51, or alternatively each hub 3 is associated with a single shelf 51 and also for each shelf 51 a single hub 3 is provided. In addition, each hub 3 is preferably placed at such a position that it has no important aerial impediments with the electronic labels 3a and in particular with a control device 3 handled by a responsible person in the vicinity of the electronic labels 3a themselves.

Server 4 is brought into connection with at least one hub 3 and preferably with several hubs, in particular with the hubs 3 that are the closest in space to server 4. Connection between server 4 and hubs 3 is preferably obtained by cable, through a network cable or the like.

The control devices 5 on the contrary can be moved and handled by the users or the responsible persons in the shops and therefore are placed at varying locations.

The inner connections between the described elements being part of apparatus 1 are suitably the following.

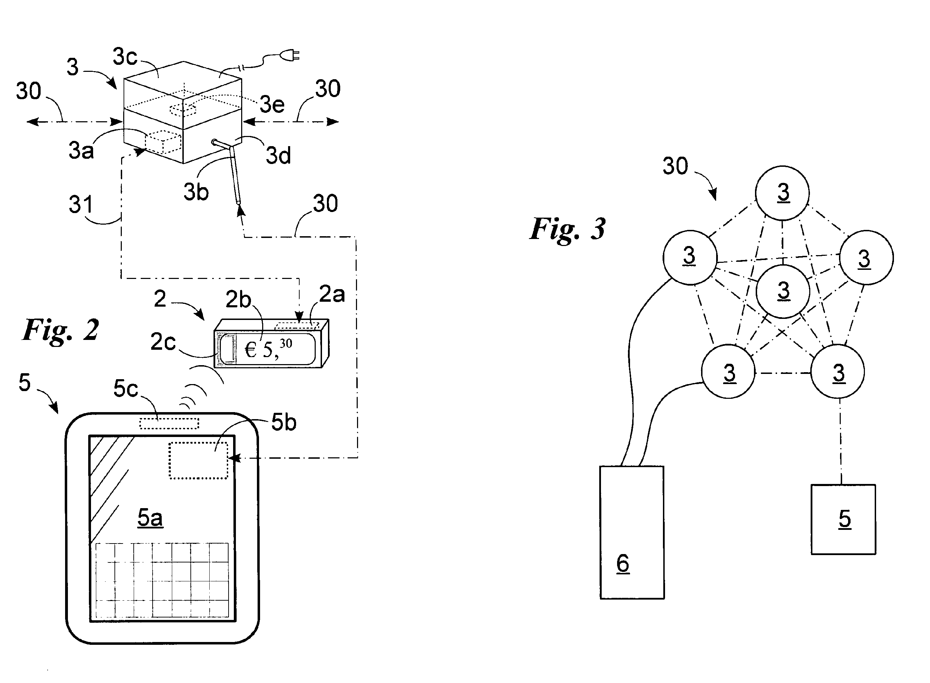

Hubs 3 are mutually connected through the main connection means 3b so as to form a mesh network 30. A mesh network, diagrammatically shown in Fig. 3 and known by itself, is a network in which each node, in this case each hub 3, is adapted to operate like an independent router and is in communication with all possible nodes. Therefore it is sufficient for each hub 3 to be connected to a single different hub 3, so that the same will be connected to the whole mesh network 30. In particular, hubs 3 are on the ceiling wherein generally no physical obstacles to transmission are present, and therefore each hub 3 is connected with a plurality of hubs 3. However, should any obstacle interfere with two hubs 3 and should the connection be lost, no problem would exist for the network 30, taking into account the plurality of connections.

Since server 4 is connected by cable to at least one hub 3, it is therefore connected to the mesh network 30 and consequently to all hubs 3. The hub 3 connected to server 4 acts as a gateway or an interface between the mesh network 30 and server 4. If, on the contrary, there are several hubs 3 connected to server 4, the mesh network 30 itself establishes that a single hub 3 will constitute the main gateway and the interface with server 4, while the others will be secondary and act as a gateway only in case of interruption of the connection with said main gateway.

The control devices 5 too, through the service connection means 5b, are connected to a hub 3 and therefore to the mesh network 30 and, as a result, to server 4. Devices 5 can therefore substantially become another node of the mesh network 30.

Instead, the electronic labels 2 are not preferably connected to the mesh network 30, but they communicate with the hub 3 which is the most suitable for them, i.e. the hub enabling them to have the lowest energy waste during reception/transmission 51 through the end connection means 2a and 3a, that are different from the communication means forming the mesh network 30 as to structure and to the used frequencies. The first end connection means 2a, placed on labels 2, is also adapted to get switched on and communicate not in a continuous manner but at predetermined time intervals or in case of variation of the information to be displayed on the indication screen 2b. In addition, the electronic labels 2 are in passive communication, i.e. without energy consumption, with the control devices 5 through the described identifying elements 2c that can be recognised by the identification means 5c of the control devices 5.

Operation of the apparatus 1 for releasing information previously described from a structural point of view is as follows.

The information to be varied on the electronic labels 2 is entered by the responsible persons, through the server 4 or the control device 5. The server 4 communicates the information to the mesh network 30. Through the latter the information reaches the hubs 3 and in particular the hub 3 that is managing the label or labels being the object of the updating correlated with, or merely close to the shelf 51 on which it is provided the electronic label the screen 2b of which is to be updated. This hub 3 communicates with the label 2 itself through the end connection means 3a and 2a. Therefore the label 2 varies the prices quoted on the indication screen 2b, following the commands of the responsible person. Labels 2 further communicate with hub 3 at predetermined time intervals or under predetermined situations informing it that no inconvenience exists. For instance, the labels communicate the amount of charge present in their battery, if the screen 2b is becoming deteriorated, if the label itself 2 has moved or has fallen. The last-mentioned communication is made possible by the accelerometer or inclinometer or other sensors disposed on label 2.

Therefore the electronic labels 2 show the purchasers information about the prices of each type of product 52 for example, said prices being always updated and the operation of labels 2 being always monitored.

If on the contrary an operator in the shop 50 must check inner data, such as amount of stocks, sell-by dates and others, or wishes the price of the product to be directly varied without using the server, said operator uses the control device 5. In particular, he/she places the identification means 5c of the device 5 close to the electronic label 2 indicating the type of product 52 to be controlled. The identification means 5a recognises the electronic label 2 through the identifying element 2c. The device 5 is then connected through the service connection means 5a, to the hub 3 placed at the shelf 51 on which the examined label 2 is present. The control device 5 is then connected to the mesh network 30 and server 4 and consequently directly communicates with server 4 obtaining information therefrom or operating change of price.

The last-mentioned connection can be also obtained by means of control devices 5 owned by purchasers and customers of the shop 50 and compatible with the hubs 3 or also the mesh network 30. In this case a suitable signal would identify that the person who is getting connected is a purchaser and the server 4 would communicate different information, such as special offers, premium points or score, consumers' opinions and others.

If the electronic labels 2 indicate a plurality of types of products 52, it is necessary for device 5 to offer the possibility of further selecting the type of product 52 or all products must be observable, or also the label must be provided with a plurality of identifying elements 5c, so that the types of products 52 can be uniquely identified.

The invention further comprises a new process for releasing information in shops 50, as above described, through the information-releasing apparatus 1 preferably of the previously described type.

The process comprises a step of releasing information to the purchasers, consisting in: mutually connecting the hubs 3 through a mesh network 30, connecting the server 4 to at least one hub 3 and connecting each electronic label 2 to a hub 3 through an end connection 31.

Suitably, the process further comprises a step of releasing information to the responsible persons or the purchasers as previously described, consisting in: connecting a control device 5 to a hub 3 and consequently to the mesh network 30, identifying an electronic label 2 through the control device 5 and the above described means 5c, and finally obtaining information on the service screen 5a of the control device 5 correlated with the types of products 52 identified by the label 2.

Other details of the process are set out in the above described operation.

The described apparatus and process for releasing information achieve important advantages.

In fact, the presence of hubs 3 connected through a mesh network 5 and disposed at the ceiling causes said hubs 3 to be always connected to server 4 also in the presence of obstacles, given the nature of the mesh network 30. The server must therefore be connected by cable even to a single hub 3.

In addition, the connection frequency of the mesh network 30, to about 5 GHz, always present, is non-invasive and does not interfere with other devices possibly present on the territory, which on the contrary frequently happens with the connections always present to 2.4 GHz. In fact the connections to 2.4 GHz are restricted to communications between labels 2 and hub 3 that are not constant but isolated and therefore do not show interference problems.

The presence of a hub 3 at each shelf 5a enables the mutual connections between the different hubs 3, between hubs 3 and labels 2 and hubs 3 and control devices 5, to be always clear and present.

Being the network between the hubs of the mesh type, all hubs can keep the information of all labels. This brings about some advantages such as: in case of malfunction of a hub, its work burden, i.e. management of a given number of labels, can be transferred to one or more adjacent hubs; in case of displacement of the label, the latter never loses connection with the system; the mesh system allows a perfect virtual management of the electronic labels; in fact, it is not necessary to assign an electronic label to a specific hub but it is the electronic label itself that chooses (selects) the hub enabling it to offer the best transmission with the lowest battery consumption.

In addition, due to the fact that the information to the responsible persons is communicated through the control devices 5 and not through the labels 2, labels 2 utilise less energy as they must not receive or transmit. In fact, the label batteries, distributed in the shop 50, are more complex when it is necessary to recharge or replace them as compared with the batteries of devices 5 that are continuously and easily recharged. In addition, the devices 5 can include bigger screens that are simpler to read and can contain more items of information giving a more precise picture of the service information state of the product.

A further advantage resides in that the electronic labels 2 communicate with the server now and then, keep their screen 2b as much as possible constant and comprise a passive identifying element 2c. This makes the batteries to become exhausted very slowly, as the steps that use more energy are transmission and updating operations. In addition the labels 2 themselves only now and then communicate the state of charge of their battery or whether the signal level is optimal for a communication taking into account the energy consumption. The responsible person can therefore carry out a control of same from server 4.

A further advantage is given by the fact that each hub 3 is connected to the docking station. This allows a quick replacement of the hub in case of malfunction. In fact, once the hub with a malfunction has been disconnected and the new hub connected, the system begins operating again immediately.

Finally, the connection between control devices 5 and server 4, through the mesh network 30, is very quick and therefore allows transfer of important amounts of information per time unit.

The invention is susceptible of variations falling within the scope of the inventive idea. All of the details can be replaced by equivalent elements and the materials, shapes and sizes can be of any nature and magnitude.

In particular, labels 2 can reproduce information of any type such as: news, special offers and others.

## Claims

1. An apparatus for releasing information (1) in shops (50) and the like, said shops comprising at least one shelf (51) including different types of products (52), said information-releasing apparatus comprising: a plurality of electronic labels (2) including an indication screen (2b) and each adapted to quote the price of at least one of said types of products (52), a plurality of hubs (3), a server (4) connected to at least one of said hubs (3) and adapted to enable command and control of said electronic labels (2) by a responsible person or shop assistant, **characterised in that** each electronic label (2) is adapted to communicate with one of said hubs (3) through first and second end connection means (2a, 3a) disposed on said electronic labels (2) and said hubs (3) respectively, said hubs (3) being mutually connected through main connection means (3b) in a mesh network (30).

2. An apparatus as claimed in claim 1, comprising at least one control device (5) adapted to be handled by a user and comprising a service screen (5a) and service connection means (5b) adapted to be connected to at least one of said hubs (3).

3. An apparatus as claimed in claim 2, wherein said service connection means (5a) is adapted to be connected to said main connection means (3b) and said mesh network (30).

4. An apparatus as claimed in claim 2 or 3, wherein said electronic labels (2) comprise an identifying element (2c) and wherein said control device (5) comprises identification means (5c) adapted to recognise said identifying element (2c).

5. An apparatus as claimed in claim 4, wherein said identifying element (2c) comprises a passive RFID tag and said identification means (5c) comprises a passive RFID tag reader.

6. An apparatus as claimed in one or more of the preceding claims, wherein said main connection means (3b) communicates through aerial electromagnetic waves to frequencies close to 5 GHz.

7. An apparatus as claimed in one or more of the preceding claims, wherein said connection between said server (4) and at least one of said hubs (3) takes place by cable.

8. An apparatus as claimed in one or more of the preceding claims, wherein said end connection means (2a, 3a) communicates through aerial electromagnetic waves to frequencies substantially of 2.4 GHz.

9. A shop (50) comprising at least one shelf (51) including different types of products (52) and an apparatus for releasing information (1) as claimed in one or more of the preceding claims, wherein each hub (3) is disposed at the ceiling of said shop.

10. A process for releasing information (1) in shops (50) and the like, said shops comprising at least one shelf (51) including different types of products (52), said information-releasing process being put into practice through an information-releasing apparatus comprising: a plurality of electronic labels (2) including an indication screen (2b) and each adapted to quote the price of at least one of said types of products (52), a plurality of hubs (3), a server (4) adapted to enable command and control of said electronic labels (2) by a user, said process being **characterised in that** it comprises an information-releasing step to give information to the purchasers, consisting in: mutually connecting said hubs (3) through a mesh network (30); connecting said server (4) to at least one of said hubs (3); connecting each of said electronic labels (2) to one of said hubs (3) through an end connection (31).

11. A process as claimed in claim 10, comprising an information-releasing step to give information to the responsible persons, consisting in: connecting a control device (5) adapted to be handled by a user to one of said hubs (3) and said mesh network (30), identifying one of said electronic labels (2) through said control device (5), obtaining information on said control device (5) correlated with said type of product (32) identified by said label (2).
